# EUROPEAN PATENT APPLICATION

(11) **EP 4 417 403 A1**
(43) Date of publication of application: **21.08.2024**
(21) Application number: 22880274.0
(22) Date of filing: 10.10.2022
(51) Int. Cl.: B29D 7/01, B29B 7/20

(54) **PVC FLOOR, AND PRODUCTION LINE AND PREPARATION METHOD THEREFOR**

(30) Priority: 14.10.2021 CN 202111199870
(71) Applicant: Wuxi Boyu Plastic Machinery Co., Ltd., Wuxi, Jiangsu 214111 (CN)
(72) Inventor: LU, Dingyi, Wuxi, Jiangsu 214111 (CN)
(74) Representative: PGA S.p.A., Milano, Succursale di Lugano
(86) International application number: PCT/CN2022/124430
(87) International publication number: WO 2023/061337

(57) **Abstract**

The present invention discloses a PVC floor, and a production line and preparation method thereof. The production line comprises a feeding system, an internal mixing and extruding device, a calendering laminating device, a cooling device, a tractor, and a cutting machine arranged in sequence along a material conveying direction, wherein the internal mixing and extruding device comprises an internal mixing mechanism, an extruding mechanism, and a hopper. In the production line of the present invention, materials are rapidly dispersed and plasticized by means of an internal mixing section of the internal mixing and extruding device, and the plasticized materials directly enter an extruding section through the hopper to be subjected to extruding forming, which has a good plasticizing effect, and solves the problem of a poor plasticizing effect of traditional extruders caused by forced plasticizing of a PVC rigid product without a plasticizer; in addition, the materials do not need to pass through a high-speed mixer, and the materials are directly extruded after being plasticized, thereby shortening the mixing and extruding time of the materials, reducing energy consumption, and reducing the use of a stabilizer and internal and external lubricants in a raw material formula.

## Description

### Technical field

The present invention relates to the technical field of floor manufacturing, and in particular to a PVC floor, its production line and preparation method.

### Background art

In the extruding stage of existing PVC flooring production, a high-speed mixer is first used to stir the material to a high temperature of about 120°C, and then it is discharged into a cooling mixer for cooling, and a conical twin-screw extruder with good shear force is used for forced plasticization. This method wastes a lot of energy. It needs to be heated for about 20-40 minutes, cooled at high temperature, and then discharged into an extruder heated to 190-200°C for plasticization and extrusion into plates. The material is heated to 120-135°C by a high-speed mixer, and then cooled to about 50°C by a cooling mixer. There is a temperature difference of 70-85°C in the middle. This method has high energy consumption, a long mixing time cycle, and high mixing costs. Furthermore, the material is plasticized only through forced shearing and frictional heat generation by the screw rod of the extruder. For PVC rigid products that do not contain plasticizers, the plasticizing effect is not good.

### Summary of invention

The present invention aims to solve at least one of the technical problems existing in the prior art. To this end, the present invention proposes a PVC floor and its production line and preparation method. The production line can reduce energy consumption, shorten the time of material mixing and extruding, reduce costs, optimize the plasticizing effect, and is suitable for PVC rigid products without plasticizers.

The PVC floor production line according to the embodiment of the first aspect of the present application comprises a feeding system, an internal mixing and extruding device, a calendering and laminating device, a cooling device, a tractor and a cutting machine arranged in sequence along a material conveying direction, a film material unwinding mechanism being arranged on top of the calendering and laminating device, feeding tracks being arranged between the calendering and laminating device, the cooling device, the tractor and the cutting machine; the internal mixing and extruding device comprising an internal mixing mechanism, an extruding mechanism and a hopper, the internal mixing mechanism comprising an internal mixing chamber, a first feed port being arranged at a rear end of the internal mixing chamber, and a first discharge port being arranged at a front end of the internal mixing chamber, rotors being arranged along front and rear in the internal mixing chamber, the extruding mechanism being located below the internal mixing mechanism, the extruding mechanism comprising an extruding chamber, a second feed port being arranged at a rear end of the extruding chamber, a mould being arranged at a front end of the extruding chamber, a screw rod being arranged along front and rear in the extruding chamber, the hopper being connected between the first discharge port and the second feed port.

According to some embodiments of the present invention, the rotor has a double kneaded structure, the rotor comprises a rotor shaft, a feeding conveying section, a first mixing section, a first screw section, a second mixing section and a first discharging section being arranged in sequence on the rotor shaft. This type of rotor can effectively fill the entire mixing chamber with materials during internal mixing. It has a high filling rate and good dispersion. It is suitable for temperature-sensitive raw materials and has a good plasticizing effect.

According to some preferred embodiments of the present invention, a second screw section is further arranged between the second mixing section and the first discharging section. The entire rotor is lengthened, which has a good effect on material discharge. Before discharging, the material is cut from the original block into small pieces or large particles, which facilitates the feeding of the extruding chamber below. In addition, it can also improve the plasticizing effect and shorten the time.

According to some embodiments of the present invention, the rotor has a single kneaded structure, and the rotor comprises a rotor shaft, on which a feed conveying section, a mixing section and a second discharging section are arranged in sequence. This type of rotor has strong versatility and good stability in conveying materials.

According to some preferred embodiments of the present invention, a third screw section is also arranged between the mixing section and the second discharging section. The entire rotor is lengthened, which has a good effect on material discharge. Before discharging, the material is cut from the original block into small pieces or large particles, which facilitates the feeding of the extruding chamber below. In addition, it can also improve the plasticizing effect and shorten the time.

According to some embodiments of the present invention, a forced feeding device is provided in the hopper. The forced feeding device comprises two rotating shafts arranged in parallel. Paddles are provided on the rotating shafts, and the two rotating shafts rotate relative to each other.

According to some embodiments of the present invention, the two rotating shafts are respectively driven by a driving gear and a driven gear that mesh with each other.

According to some embodiments of the present invention, the screw rod is a conical twin screw rod, a single screw rod or a parallel twin screw rod.

According to some embodiments of the present invention, the feeding system comprises a vacuum feeder, a loss-in-weight feeder and a mixing bin connected in sequence. The discharge port of the mixing bin is provided with a screw meter. The feed port is connected with the first feed port. The materials are conveyed to the loss-in-weight feeder through the vacuum feeder and are accurately batched using the loss-in-weight feeder. The batched materials are temporarily stored in the mixing bin and are fed by the screw meter to the internal mixing and extruding device. The materials directly enter the internal mixing and extruding device for internal mixing and extruding without passing through the high-speed mixer.

According to some embodiments of the present invention, the calendering and laminating device is one of a three-roller calender, a four-roller calender, or a five-roller calender. The above calendering machine integrates calendering and laminating or embossing and can achieve thickness setting and surface effect treatment of the substrate.

According to some embodiments of the present invention, the calendering and laminating device is a five-roller calender, and the five-roll calender comprises a set of thickness-setting rollers, a set of pre-laminating rollers, and a set of pressing rollers, the set of pressing rollers comprising embossing rollers, and the embossing rollers being provided with a water cooling device. The extruded substrate is calendered by the set thickness-setting rollers to obtain the target thickness, and then laminated and embossed by the set of pre-laminating rollers and the set of pressing rollers. By using the five-roll calender, the substrate layer, printing layer, and wear-resistant layer can be easily and quickly pressed into shape, and clear and sharp embossed patterns can be produced.

According to some embodiments of the present application, the calendering and laminating device may also be a calendering and laminating line composed of a set of thickness-setting rollers and a plurality of laminating units, and the thickness-setting rollers are located at the front end of the calendering and laminating line. A plurality of laminating units are sequentially connected behind the thickness-setting rollers. The number of laminating units increases or decreases according to the demand of the product. The film material unwinding mechanism is located above the laminating units. The laminating unit comprises a preheating roller, a laminating roller, and a roller conveying line for carrying materials. Further, the roller conveying line can be equipped with a preheating system. Further, the end of the calendering and laminating line is also equipped with embossing rollers. The extruded substrate is first calendered by a thickness-setting roller, and then passed through multiple laminating units in sequence to coat the substrate with a film, and finally passed through an embossing roller.

According to some embodiments of the present application, an automatic plate lifter is further provided after the cutting machine, for stacking the cut plates.

According to some embodiments of the present application, more than two internal mixing and extruding devices are provided to form a co-extruding system, and ABA and ABC-type composite substrates can be obtained through the co-extruding process.

The invention also provides a method for preparing PVC floor, which is carried out using the PVC flooring production line and comprises the following steps:
S1: placing raw materials in the feeding system, and the raw materials being mixed and extruded through the internal mixing and extruding device to obtain a PVC base plate;
S2: driven by the tractor, the PVC base plate entering the calendering and laminating device for thickness setting and film application, then entering the cooling device for cooling, and finally being cut by the cutting machine to obtain the PVC floor.

According to some embodiments of the present invention, the raw materials comprise PVC and stone powder, and the mass ratio of the PVC and stone powder is 1:(2-5). Furthermore, plasticizer may be absent in the raw materials.

According to some embodiments of the present invention, the raw materials further comprise a foaming agent, and the density of the obtained PVC floor is 1.3-1.8g/cm³.

According to some embodiments of the present invention, the film material unwinding mechanism uses one or more of LVT coiled material, fiberglass coiled material or polymer film according to product needs, and two or more layers of coating layers of the same material or different materials being formed on the PVC base plate.

The invention also provides a PVC floor, which is prepared by the preparation method.

According to a preferred embodiment of the present invention, it has at least the following beneficial effects: the production line of the present invention uses the internal mixing section of the internal mixing and extruding device to quickly disperse and plasticize materials, and the plasticized materials enter directly through the hopper into the extruding section to carry out extruding and moulding, and the plasticizing effect is good, which avoids the problem of poor plasticizing effect caused by the traditional extruder's forced plasticization of PVC rigid products without plasticizers, and does not need to go through a high-speed mixer. Direct extruding after plasticization shortens the mixing and extruding time of the materials, reduces energy consumption, and reduces the usage of stabilizers and internal and external lubricants in the raw material formula. The production line of the present invention has a high degree of automation and can realize continuous and efficient production of PVC flooring.

### Description of drawings

The above and/or additional aspects and advantages of the present invention will become apparent and readily understood from the description of the embodiments taken in conjunction with the following drawings, in which:
Figure 1 is a schematic diagram of the overall structure of an embodiment of the present invention;
Figure 2 is a schematic structural diagram of the internal mixing and extruding device 200 of the present invention;
Figure 3 is a first structural schematic diagram of the rotor 1000 of the present invention;
Figure 4 is a second structural schematic diagram of the rotor 1000 of the present invention;
Figure 5 is a third structural schematic diagram of the rotor 1000 of the present invention;
Figure 6 is a fourth structural schematic diagram of the rotor 1000 of the present invention.

Reference signs: vacuum feeder 110, loss-in-weight feeder 120, mixing bin 130, internal mixing and extruding device 200, internal mixing mechanism 210, internal mixing chamber 211, first feed port 212, first discharge port 213 , extruding mechanism 220, extruding chamber 221, second feed port 222, mould 223, screw rod 224, hopper 230, forced feeding device 231, five-roll calender 300, cooling device 400, tractor 500, cutting machine 600, automatic plate lifter 700, film material unwinding mechanism 800, feeding track 900, rotor 1000, rotor shaft 1010, feeding conveying section 1020, first mixing section 1030, first screw section 1040, second mixing section 1050 , first discharge section 1060 , second screw section 1070 , mixing section 1080 , second discharge section 1090 , and third screw section 1100 .

### Detailed Description

Embodiments of the present application are described in detail below, examples of which are shown in the drawings, wherein the same or similar reference signs denote the same or similar elements or elements having the same or similar functions throughout. The embodiments described below by referring to the figures are exemplary, and are only for explaining the present application, and should not be construed as limiting the present application.

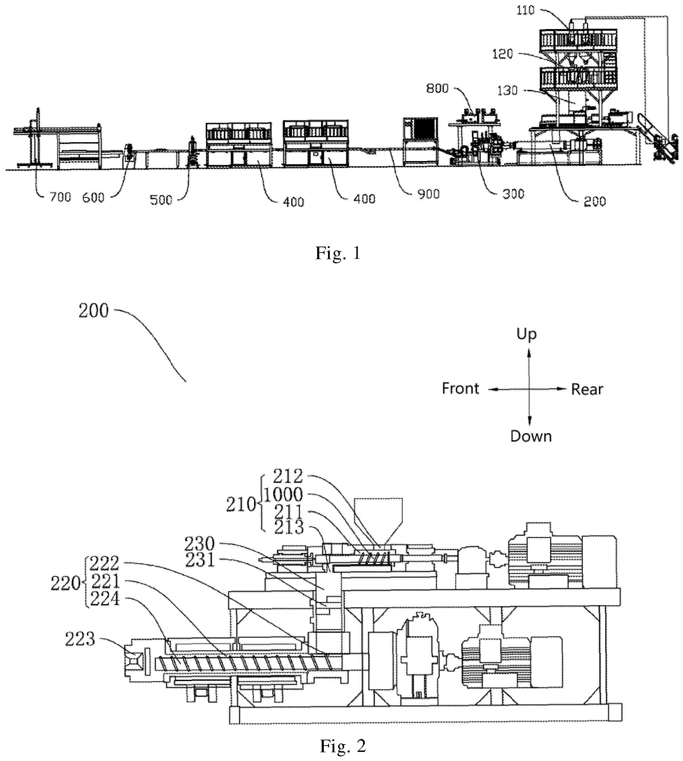

Referring to Figures 1 and 2, a PVC flooring production line is provided with a feeding system, an internal mixing and extruding device 200, a five-roll calender 300, a cooling device 400, a tractor 500, a cutting machine 600 and an automatic plate lifter 700 in sequence along the material conveying direction. On top of the five-roll calender 300 is provided with a film material unwinding mechanism 800, and the five-roll calender 300, the cooling device 400, the tractor 500 and the cutting machine 600 are equipped with a feeding track 900; the feeding system comprising a vacuum feeder 110, a loss-in-weight feeder 120 and a mixing bin 130 connected in sequence, the discharge port of the mixing bin 130 is provided with a screw meter, and the discharge port of the mixing bin 130 is connected to the first feed port 212; The internal mixing and extruding device 200 comprises an internal mixing mechanism 210, an extruding mechanism 220 and a hopper 230. The internal mixing mechanism 210 comprises an internal mixing chamber 211. The rear end of the internal mixing chamber 211 is provided with a first feed port 212, and the front end is provided with a first discharge port 213, the rotors 1000 are arranged along the front and rear in the internal mixing chamber 211, the extruding mechanism 220 is located under the internal mixing mechanism 210, the extruding mechanism 220 comprises an extruding chamber 221, and the rear end of the extruding chamber 221 is provided with a second feed port 222, the front end is provided with a mould 223, the extruding chamber 221 is provided with a screw rod 224 arranged along the front and rear, the hopper 230 is connected between the first discharge port 213 and the second feed port 222; a forced feeding device 231 is provided in the hopper 230, and the forced feeding device 231 comprises two rotating shafts arranged in parallel, on which paddles are arranged, and the two rotating shafts rotate relatively, and the two rotating shafts are respectively driven by a driving gear and a driven gear meshing with each other; the five-roll calender 300 comprises a set of thickness-setting rollers, a set of pre-laminating rollers, and a set of pressing rollers. The set of pressing rollers comprises embossing rollers, and the embossing rollers are provided with a water cooling device.

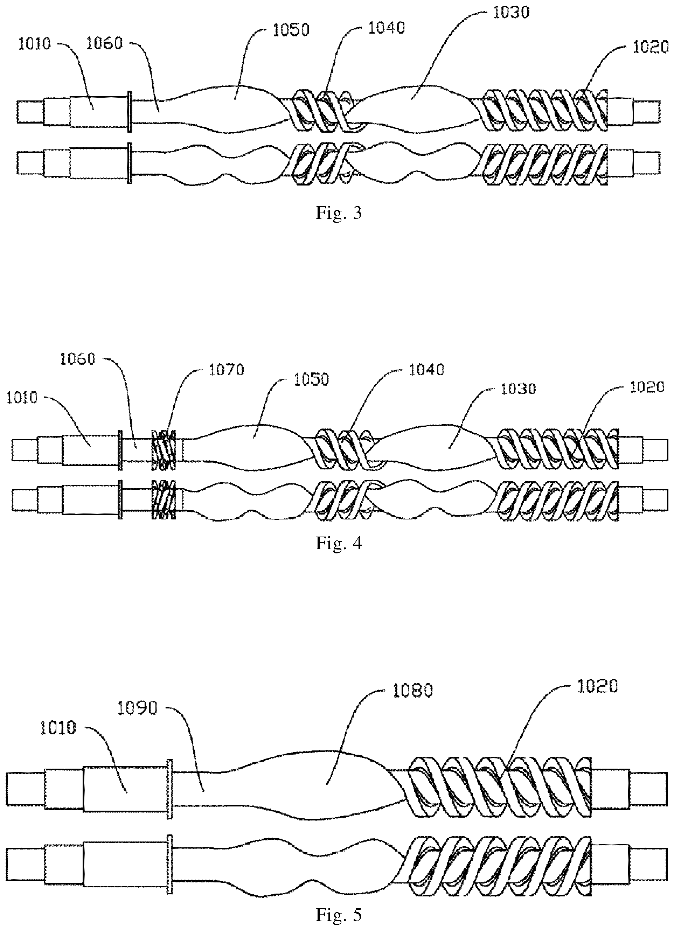

In some of these embodiments, referring to Fig. 3, the rotor 1000 has a double kneaded structure, and the rotor 1000 comprises a rotor shaft 1010, on which a feeding conveying section 1020, a first mixing section 1030, a first screw section 1040, a second mixing section 1050 and a first discharge section 1060 are sequentially arranged. This type of rotor can effectively fill the entire internal mixing chamber with materials during internal mixing, with high filling rate and good dispersion. It is suitable for temperature-sensitive raw materials and makes the plasticizing effect of materials good.

In some of these embodiments, referring to Fig. 4, the rotor 1000 has a double kneaded structure, and the rotor 1000 comprises a rotor shaft 1010, on which a feeding conveying section 1020, a first mixing section 1030, a first screw section 1040, a second mixing section 1050 and a first discharge section 1060 are sequentially arranged. A second screw section 1070 is also provided between the second mixing section 1050 and the first discharge section 1060. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

In some of these embodiments, referring to FIG. 5, the rotor 1000 has a single kneaded structure, and the rotor 1000 comprises a rotor shaft 1010, on which a feeding conveying section 1020, a mixing section 1080 and a second discharge section 1090 are sequentially arranged. This type of rotor has strong versatility and good stability for conveying materials.

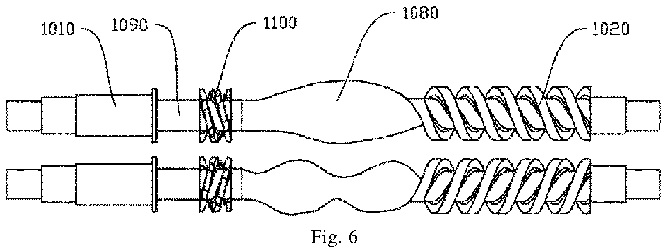

In some of these embodiments, referring to FIG. 6, the rotor 1000 has a single kneaded structure, and the rotor 1000 comprises a rotor shaft 1010, on which a feeding conveying section 1020, a mixing section 1080 and a second discharge section 1090 are sequentially arranged. A third screw section 1100 is also provided between the mixing section 1080 and the second discharge section 1090. The entire rotor is lengthened, which has a good effect on the material discharge. Before the material is discharged, the material is cut from the original block into small pieces or large particles, which is convenient for the feeding of the extruding chamber below. In addition, it can also improve the plasticizing effect and shorten the time.

In some of these embodiments, the screw rod 224 is a conical twin screw rod, a single screw rod or a parallel twin screw rod.

A method for preparing PVC floor, using the above-mentioned PVC floor production line, comprising the following steps:
S1: placing raw materials in the vacuum feeding machine, and the raw materials are mixed and extruded through the internal mixing and extruding device to obtain a PVC base plate. The raw materials comprise PVC and stone powder;
S2: driven by the tractor, the PVC base plate enters the calendering and laminating device for thickness setting and film application, then enters the cooling device for cooling, and is finally cut by the cutting machine to obtain the PVC floor.

In some embodiments, the formula of the raw materials is PVC and stone powder with a mass ratio of 1:(2-5), and the raw materials do not contain plasticizer.

In some of the embodiments, the raw materials also comprise a foaming agent, and the density of the obtained PVC floor is 1.3-1.7g/cm³.

In some embodiments, the film material unwinding mechanism uses one or more of LVT coiled material, fiberglass coiled material or polymer film according to product needs, and two or more layers of coating layers of the same material or different materials being formed on the PVC base plate.

The embodiments of the present invention have been described in detail above in conjunction with the accompanying drawings. However, the present invention is not limited to the above embodiments. Within the scope of knowledge possessed by those of ordinary skill in the art, various modifications can be made without departing from the purpose of the present invention.

## Claims

1. A PVC floor production line, **characterized in that**, it comprises a feeding system, an internal mixing and extruding device, a calendering and laminating device, a cooling device, a tractor and a cutting machine arranged in sequence along a material conveying direction, a film material unwinding mechanism being arranged on top of the calendering and laminating device, feeding tracks being arranged between the calendering and laminating device, the cooling device, the tractor and the cutting machine; the internal mixing and extruding device comprising an internal mixing mechanism, an extruding mechanism and a hopper, the internal mixing mechanism comprising an internal mixing chamber, a first feed port being arranged at a rear end of the internal mixing chamber, and a first discharge port being arranged at a front end of the internal mixing chamber, rotors being arranged along front and rear in the internal mixing chamber, the extruding mechanism being located below the internal mixing mechanism, the extruding mechanism comprising an extruding chamber, a second feed port being arranged at a rear end of the extruding chamber, a mould being arranged at a front end of the extruding chamber, a screw rod being arranged along front and rear in the extruding chamber, the hopper being connected between the first discharge port and the second feed port.

2. The PVC floor production line according to claim 1, **characterized in that** the feeding system comprises a vacuum feeder, a loss-in-weight feeder, and a mixing bin connected in sequence, a screw meter being provided at a discharge port of the mixing bin, the discharge port of the mixing bin is connected with the first feed port.

3. The PVC floor production line according to claim 1, **characterized in that** the calendering and laminating device is one of a three-roll calender, a four-roll calender or a five-roll calender.

4. The PVC floor production line according to claim 1, **characterized in that** the calendering and laminating device is a five-roll calender, and the five-roll calender comprises a set of thickness-setting rollers, a set of pre-laminating rollers, and a set of pressing rollers, the set of pressing rollers comprising embossing rollers, and the embossing rollers being provided with a water cooling device.

5. The PVC floor production line according to claim 1, **characterized in that** an automatic plate lifter for stacking products is provided after the cutting machine.

6. The PVC floor production line according to claim 1, **characterized in that** two or more internal mixing and extruding devices are arranged to form a co-extruding system.

7. A method for preparing PVC floor, **characterized in that** it is carried out using the PVC floor production line of claim 1 and comprises:
S1: placing raw materials in the feeding system, and the raw materials being mixed and extruded through the internal mixing and extruding device to obtain a PVC base plate;
S2: driven by the tractor, the PVC base plate entering the calendering and laminating device for thickness setting and film application, then entering the cooling device for cooling, and finally being cut by the cutting machine to obtain the PVC floor.

8. The preparation method according to claim 7, **characterized in that** the raw materials further comprise a foaming agent, and the density of the obtained PVC floor is 1.3-1.8g/cm³.

9. The preparation method according to claim 7, **characterized in that** the film material unwinding mechanism uses one or more of LVT coiled material, fiberglass coiled material or polymer film according to product needs, and two or more layers of coating layers of the same material or different materials being formed on the PVC base plate.

10. A PVC floor, **characterized in that** it is prepared by the preparation method of any one of claims 7 to 9.
